Europäisches Patentamt

European Patent Office

Office européen des brevets

(19)

(11) **EP 0 845 084 B1**

(12) **EUROPÄISCHE PATENTSCHRIFT**

(45) Veröffentlichungstag und Bekanntmachung des Hinweises auf die Patenterteilung:
**03.03.2004 Patentblatt 2004/10**

(21) Anmeldenummer: **96926309.4**

(22) Anmeldetag: **19.08.1996**

(51) Int Cl.⁷: **F16C 39/06**

(86) Internationale Anmeldenummer:
**PCT/CH1996/000287**

(87) Internationale Veröffentlichungsnummer:
**WO 1997/007341 (27.02.1997 Gazette 1997/10)**

(54) **RADIALE AKTIVE MAGNETISCHE LAGERVORRICHTUNG UND VERFAHREN ZUM BETRIEB DERSELBEN**

RADIAL ACTIVE MAGNETIC BEARING DEVICE AND PROCESS FOR OPERATING IT

PALIER MAGNETIQUE ACTIF RADIAL ET SON PROCEDE DE FONCTIONNEMENT

(84) Benannte Vertragsstaaten:
**CH DE FR GB LI**

(30) Priorität: **18.08.1995 CH 236795**
**30.07.1996 EP 96810507**

(43) Veröffentlichungstag der Anmeldung:
**03.06.1998 Patentblatt 1998/23**

(73) Patentinhaber: **Lust Antriebstechnik GmbH**
**35633 Lahnau (DE)**

(72) Erfinder: **SCHÖB, Reto**
**CH-8604 Volketswil (CH)**

(74) Vertreter: **Sulzer Management AG**
**Patentabteilung / 0067,**
**Zürcherstrasse 12**
**8401 Winterthur (CH)**

(56) Entgegenhaltungen:
**EP-A- 0 054 617        EP-A- 0 311 122**
**EP-A- 0 612 928        WO-A-90/14525**
**DE-A- 2 353 342**

• **TECHNISCHE RUNDSCHAU, Nr. 35,**
**3.September 1993, BERN,CH, Seiten 60-66,**
**XP000394185 J.BICHSEL: "Der lagerlose**
**Elektromotor"**

**Beschreibung**

Die Erfindung betrifft eine radiale, aktive magnetische Maxwell-Lagervorrichtung gemäss dem Oberbegriff von Anspruch 1 sowie ein Verfahren zum Betrieb derselben gemäss dem Obergiff von Anspruch 9.

Aus der EP 0 612 928 ist ein radiales, aktives magnetisches Lager zum berührungslosen Lagern eines rotierbaren Körpers bekannt. Ein derartiges magnetisches Lager umfasst jeweils drei in Umfangsrichtung um je 120 Grad versetzt angeordnete Elektromagnete, wobei jedes der drei Elektromagnete von einem separaten Verstärker mit elektrischer Energie versorgt wird. Ein Nachteil dieses bekannten magnetischen Lagers ist darin zu sehen, dass drei separate Leistungsverstärker notwendig sind, die zudem besonders angepasst ausgestaltet und daher relativ teuer sind.

Aus dem Artikel "Der lagerlose Elektromotor" von Jürg Bichsel, Technische Rundschau No. 35 (1993), ist bekannt, im Falle von Maxwell-Lagervorrichtungen jeden Elektromagneten mit einem separaten Verstärker anzusteuern. Sofern es Lorentz-Lager betrifft, das sind Magnetlager, bei denen die Lagerung mit Hilfe von Lorentz-Kräften bewirkt wird, ist es aus dem besagten Artikel bekannt, für solche Lorentz-Lager dreiphasige Drehstromsteller zu verwenden.

Aus der WO-A-90/14525 ist ein Maxwell-Lager bekannt, bei welchem der Stator zwei Statorringe umfasst, zwischen denen ein Magnet zur Erzeugung einer Vormagnetisierung angeordnet ist. Dieser Magnet kann entweder ein Permanentmagnet oder ein Elektromagnet sein. Der von diesem Magneten erzeugte Vormagnetisierungsfluss wird in axialer Richtung über ein Polstück zu dem einen Statorring geführt, tritt dort über den Luftspalt zwischen Statorring und Rotor in radialer Richtung in den Rotor ein, und wird in axialer Richtung längs der Rotors zu dem anderen Statorring geführt, wo der Vormagnetisierungsfluss über den Luftspalt zwischen Rotor und Statorring in radialer Richtung in den anderen Statorring eintritt. Von diesem Statorring wird der Vormagnetisierungsfluss über ein weiteres Polstück in axialer Richtung zu dem Magneten zurückgeführt, wodurch der magnetische Kreis geschlossen ist. In beiden Statorringen sind jeweils Wicklungen zur Erzeugung eines Steuerflusses angeordnet, mit welchem die radiale Position des Rotors steuerbar ist.

Es ist Aufgabe der vorliegenden Erfindung eine wirtschaftlich vorteilhafte, aktive magnetische Maxwell-Lagervorrichtung vorzuschlagen.

Diese Aufgabe wird gelöst durch eine Maxwell Lagervorrichtung gemäss den Merkmalen von Anspruch 1. Die Unteransprüche 2 bis 8 beziehen sich auf weitere, vorteilhafte Ausgestaltungen der Erfindung. Die Aufgabe wird weiter gelöst durch ein Verfahren gemäss den Merkmalen von Anspruch 9.

Ein radiales, aktives magnetisches Maxwell-Lager verwendet die sogenannte Maxwell-Kraft, um ein rotierbares Teil berührungslos in der Schwebe zu halten. Diese Maxwell-Kraft ist der Grund für die Anziehungskraft magnetisch leitfähiger Körper, die sich in einem Magnetfeld befinden.

Die Aufgabe, ein wirtschaftlich vorteilhafteres, radiales, aktives, auf der Maxwell-Kraft basierendes magnetisches Lager vorzuschlagen wird insbesondere dadurch gelöst, dass ein dreiphasiger Drehstromsteller als Leistungssteller vorgesehen ist. Ein Vorteil der Erfindung ist also darin zu sehen, dass als Drehstromsteller ein konventioneller, dreiphasiger Drehstromsteller bzw. ein dreiphasiger Umrichter verwendbar ist. Bei diesen Drehstromstellern handelt es sich um ein Standardprodukt zur Ansteuerung elektrischer Maschinen, weshalb ein derartiger Drehstromsteller sehr kostengünstig erhältlich ist.

Ein weiterer Vorteil ist darin zu sehen, dass ein konventioneller, dreiphasiger Drehstromsteller meistens einen integrierten Microcontroller aufweist, welcher für Regelaufgaben verwendbar ist. Zur Verwendung des Drehstromstellers als Ansteuervorrichtung für ein aktives magnetisches Lager bedarf es eines entsprechend angepassten Regelverfahrens, das üblicherweise in Form von Programmzeilen (Software) im Microcontroller des Drehstromstellers abgelegt werden kann. Somit kann die an sich aufwendige Signalverarbeitung weitgehend vom im Drehstromsteller integrierten Microcontroller durchgeführt werden, was Kosten für eine zusätzliche Signalverarbeitungsvorrichtung erspart.

Das erfindungsgemässe aktive, magnetische Lager kann als ein Innenläufer, d.h. mit einem innenliegenden Rotor, oder als ein Aussenläufer, d.h. mit einem die Elektromagnete aussen umgebenden Rotor, ausgestaltet sein. Das aktive, magnetische Lager erfordert eine Vormagnetisierung, welche durch ein Permanentmagnet oder durch eine Spule mit einem Gleichstromanteil erzeugbar ist.

Die Erfindung wird mit mehreren Ausführungsbeispielen im Detail beschrieben. Es zeigen:

Fig. 1a        eine Seitenansicht eines magnetischen Lagers mit drei Elektromagneten;

Fig. 1b        eine elektrische Schaltung mit dreiphasigem Drehstromsteller zur Ansteuerung des drei Elektromagnete umfassenden magnetischen Lagers;

Fig. 1c        eine Seitenansicht eines magnetischen Lagers mit sechs Elektromagneten;

Fig. 1d      eine elektrische Schaltung mit dreiphasigem Drehstromsteller zur Ansteuerung des sechs Elektromagnete umfassenden magnetischen Lagers;

Fig. 2a      eine Seitenansicht eines magnetischen Lagers mit vier Elektromagneten;

Fig. 2b      eine elektrische Schaltung mit dreiphasigem Drehstromsteller zur Ansteuerung des vier Elektromagnete umfassenden Lagers;

Fig. 3      eine im Drehstromsteller angeordnete Regelvorrichtung zur Ansteuerung des magnetischen Lagers;

Fig. 4      ein weiteres Ausführungsbeispiel eines magnetischen Lagers mit vier Spulen;

Fig. 5      ein weiteres Ausführungsbeispiel eines magnetischen Lagers mit vier Spulen;

Fig. 6      ein magnetisches Lager mit drei als Drehstromwicklung ausgestalteten Spulen;

Fig. 6a      einen Querschnitt durch ein Lager gemäss Fig. 6;

Fig. 7a      ein weiteres Ausführungsbeispiel eines magnetischen Lagers;

Fig. 7b      eine elektrische Schaltung zur Ansteuerung des magnetischen Lagers gemäss Fig. 7a;

Fig. 8a,8b      Ausführungsbeispiele einer zusätzlich in axialer Richtung ansteuerbaren Lagervorrichtung;

Fig. 8c      eine elektrische Schaltung zur Ansteuerung der magnetischen Lagervorrichtung gemäss Fig. 8a.

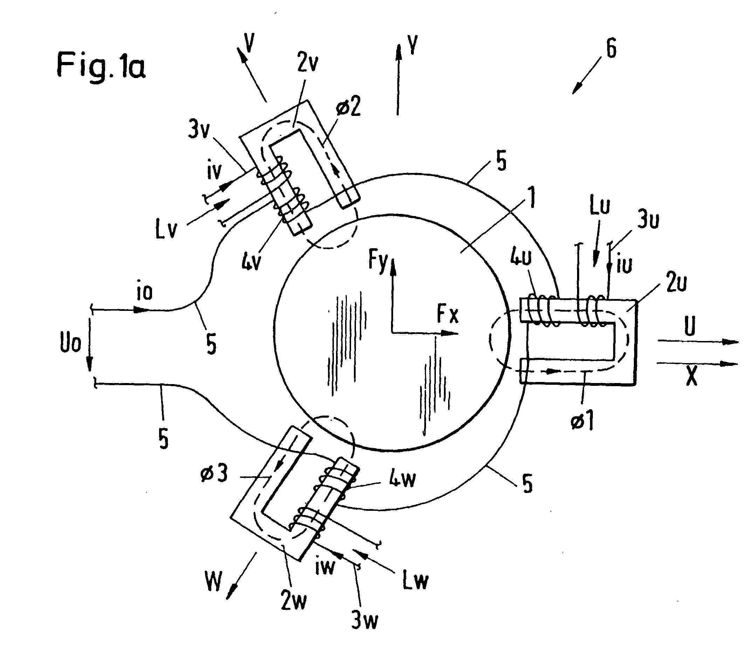

Fig. 1a zeigt in einer Seitenansicht ein Ausführungsbeispiel eines radialen, aktiven magnetischen Lagers. Der als Welle ausgestaltete Rotor 1 wird durch drei diskret und u-förmig ausgestaltete, in Umfangsrichtung um je 120° versetzt angeordnete Elektromagnete 2u,2v,2w berührungslos in der Schwebe gehalten. Jeder Elektromagnet 2u,2v, 2w weist eine Spule Lu,Lv,Lw auf zur Erzeugung eines zeitlich variablen, magnetischen Flusses $\phi 1$, $\phi 2$, $\phi 3$. Jede Spule Lu,Lv,Lw ist über elektrische Verbindungsleitungen 3u,3v,3w mit einem nicht dargestellten Drehstromsteller 10 verbunden. Das magnetische Lager erfordert eine Vormagnetisierung, welche im vorliegenden Ausführungsbeispiel durch drei mit einem Gleichstrom durchflossene Spulen 4u, 4v, 4w erzeugt wird. An jedem Spulenkern 2u, 2v, 2w ist eine gleichsinnig gewickelte Spule 4u, 4v, 4w angeordnet. Die Spulen 4u, 4v, 4w sind über einen elektrischen Leiter 5 in einer Serieschaltung miteinander verbunden und sind daher von einem gemeinsamen Gleichstrom io durchflossen. Weiter ist die horizontale X-Richtung und die vertikale Y-Richtung des Lagers dargestellt, sowie die auf die Welle 1 wirkenden Kräfte Fx und Fy. Die einzelnen Elektromagnete 2u,2v,2w sind mit einer Verlaufsrichtung u,v,w, um je 120° in Umfangsrichtung der Welle 1 versetzt angeordnet.

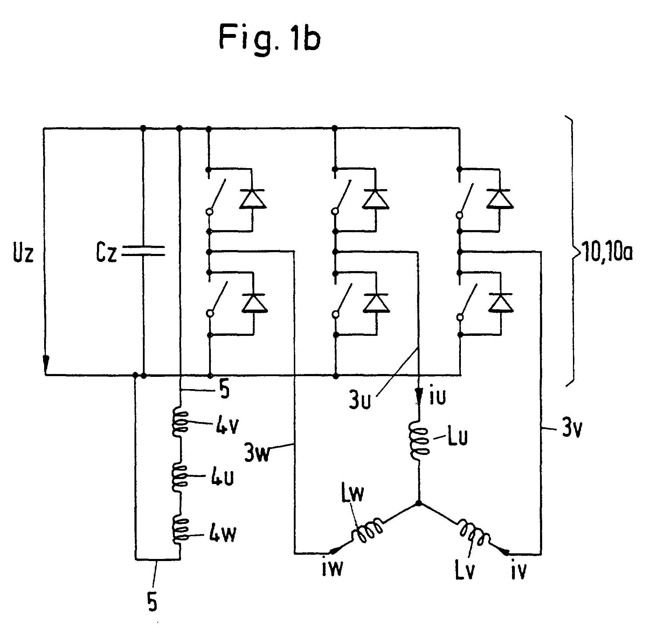

Fig. 1b zeigt die elektrische Verbindung eines dreiphasigen Drehstromstellers 10 mit den Spulen Lu,Lv,Lw des radialen, aktiven, magnetischen Lagers gemäss Fig. 1a. Der Drehstromsteller 10 wird mit einer Zwischenkreisspannung Uz betrieben und weist einen Kondensator Cz auf. Der Drehstromsteller 10 umfasst ein Leistungsteil 10a sowie eine nicht dargestellte Signalverarbeitungsvorrichtung 10b, welche einen Mikrocontroller umfasst. Die drei Spulen Lu,Lv,Lw sind in einer Sternschaltung miteinander verbunden, wobei die drei Phasenströme iu, iv, iw über die elektrischen Leiter 3u, 3v, 3w vom Leitungsteil 10a des Drehstromstellers 10 den Spulen Lu, Lv, Lw zugeführt sind. Die drei Spulen Lu,Lv,Lw könnten auch in einer Dreieckschaltung mit dem Drehstromsteller 10 verbunden sein. Der Leistungsteil 10a weist drei Brückenzweige auf, welche mit je einem elektrischen Leiter 3u, 3v, 3w verbunden sind. Im dargestellten Ausführungsbeispiel sind die drei eine Vormagnetisierung bewirkenden Spulen 4u, 4v, 4w über den elektrischen Leiter 5 in einer Serieschaltung an die Zwischenkreisspannung Uz angelegt, sodass alle Spulen 4u, 4v, 4w von einem gemeinsamen Strom io durchflossen sind.

Der Zusammenhang zwischen den auf den Rotor 1 wirkenden Kräften Fx und Fy und den an den Spulen Lu, Lv, Lw anliegenden Strömen iu, iv, iw gestaltet sich wie folgt:
k bedeutet in den folgenden Gleichungen eine Proportionalitätskonstante.

Für die Kraft Fx gilt:

$$F_x = (i_u + i_o)k - (i_v + i_o)k \sin(30°) - (i_w + i_o)k \sin(30°)$$

zusammengefasst:

$$F_x = k \left( i_u - \tfrac{1}{2} i_v - \tfrac{1}{2} i_w \right) \qquad (I)$$

Für die Kraft Fy gilt:

$$F_y = k \left( i_v - i_w \right) \cos(30°)$$

zusammengefasst:

$$F_y = k \, \sqrt{3}/2 \, \left( i_v - i_w \right) \qquad (II)$$

Für einen dreiphasigen Drehstromsteller 10 gilt immer die Nebenbedingung, dass die Summe aller Ströme gleich Null ist. Daher gilt die zusätzliche Bedingung:

$$i_u + i_v + i_w = 0 \qquad (III)$$

Somit ergibt sich bei der Verwendung eines dreiphasigen Drehstromstellers (Gleichung III) zur Ansteuerung eines aktiven, magnetischen Lagers der folgende Zusammenhang zwischen den Strömen iu, iv, iw der einzelnen Spulen Lu, Lv, Lw und der auf die Welle 1 wirkenden Kraft Fx, Fy:

$$\begin{bmatrix} i_u \\ i_v \\ i_w \end{bmatrix} = \frac{2}{3k} \cdot \begin{bmatrix} 1 & 0 \\ -\tfrac{1}{2} & \sqrt{3}/2 \\ -\tfrac{1}{2} & -\sqrt{3}/2 \end{bmatrix} \cdot \begin{bmatrix} F_x \\ F_Y \end{bmatrix} \qquad (IV)$$

Aus der Gleichung IV ist ersichtlich, dass bei der Verwendung eines konventionellen, dreiphasigen Drehstromstellers die auf die Welle 1 wirkende Kraft Fx und Fy steuerbar ist. Die beiden Kraftkomponenten Fx, Fy stehen orthogonal zueinander, sodass mit diesen beiden Komponenten Fx, Fy eine in beliebiger, radialer Richtung auf die Welle 1 wirkende Kraft erzeugbar ist. Somit wird im magnetischen Lager durch die Überlagerung einer Gleichstromdurchflutung mit einer Drehstromdurchflutung eine Gesamtdurchflutung erzeugt, welche erlaubt eine in beliebiger, radialer Richtung wirkende Kraft zu erzeugen. Dabei ist immer die Nebenbedingung erfüllt, dass die Summe der Ströme iu, iv, iw gleich Null ist, sodass ein dreiphasiger Drehstromsteller verwendbar ist.

Der Vormagnetisierungsstrom io kürzt sich heraus aus den Gleichungen I bis IV und ist daher bei der Regelung der Ströme iu, iv, iw nicht weiter zu berücksichtigen. Der Vormagnetisierungsstrom io wird vorteilhafterweise derart gewählt, dass dieser Strom io etwa die Hälfte der Sättigungsflussdichte der Spulenkerne 2u, 2v, 2w erzeugt.

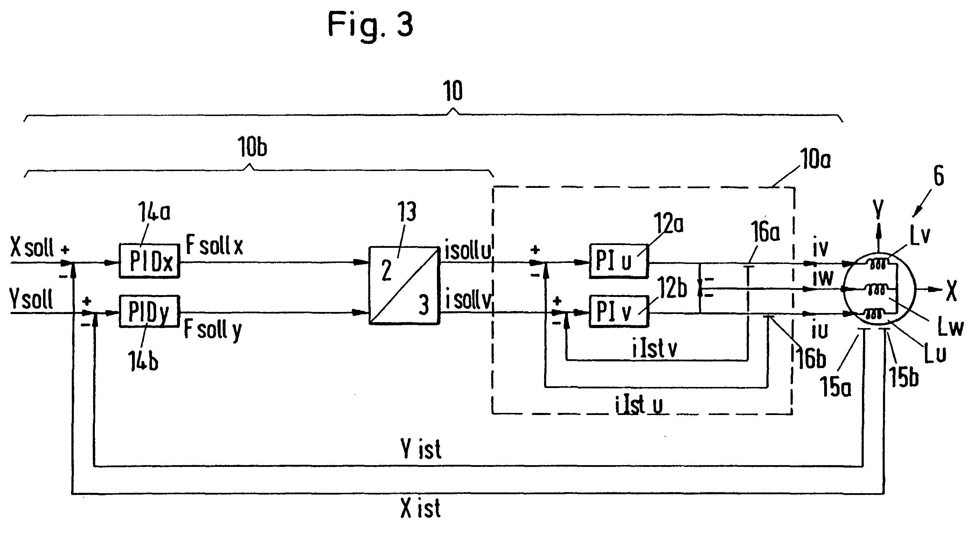

Fig. 3 zeigt einen dreiphasigen Drehstromsteller 10, welcher ein dreiphasiges Leistungsteil 10a umfasst, sowie weitere einen Regelkreis bildende elektronische Komponenten 10b. Der Drehstromsteller 10 umfasst insbesondere einen programmierbaren Mikroprozessor, welcher die jeweils erforderliche Regelung durch eine entsprechende Software zu programmieren erlaubt.

Das in Fig. 3 dargestellte Ausführungsbeispiel eines Drehstromstellers 10 weist eine Reglerstruktur zur Ansteuerung des in den Figuren 1a und 1b dargestellten, aktiven magnetischen Lagers 6 auf. Von untergeordneter Bedeutung und daher nicht dargestellt ist der Vormagnetisierungsstrom io. Die drei Spulen Lu, Lv, Lw des magnetischen Lagers 6 werden vom Leistungsteil 10a mit den Strömen iu, iv, iw versorg. Zwei am magnetischen Lager 6 angeordnete Lagesensoren 15a, 15b erfassen die jeweilige Lage des Rotor 1 in X- und Y-Richtung und erzeugen ein entsprechendes Lagesignal Xist, Yist, welches einer Vergleichsvorrichtung zugeführt wird. Diese Vergleichsvorrichtung ermittelt die Abweichung zwischen einem vorgegebenen Sollwert Xsoll, Ysoll und dem gemessenen Istwert Xist, Yist, und führt das Differenzsignal einem als PID-Regler ausgestalteten Lageregler 14a, 14b zu. Die beiden Lageregler 14a, 14b berechnen die in X- und Y-Richtung erforderliche Kraftkomponente Fsollx, Fsolly, die auf den Rotor 1 zu bewirken ist, um den Istwert Xist, Yist mit dem vorgegebenen Sollwert Xsoll, Ysoll in Übereinstimmung zu bringen. Die Kraftkomponenten Fsollx, Fsolly werden einer 2/3-Phasen-Transformationsvorrichtung 13 zugeführt, welche, unter Verwendung der Gleichung IV, die erforderlichen Stromsollwerte isollu, isollv berechnet. Dem Leistungsteil 10a sind nur zwei Stromsollwerte vorzugeben, da der dritte Stromwert durch die Bedingung, dass die Summe aller Ströme gleich Null ist, bereits bestimmt ist. Stromsensoren 16a, 16b überwachen die aktuellen Stromwerte iistu, iistv, welche mit den Sollwerten isollu, isollv verglichen werden und die Differenzwerte den als PI-Reglern ausgebildeten Stromreglern 12a, 12b zugeführt werden, welche daraufhin über Stromsteller die Ströme iu, iv bewirken. Somit ist ein aktives, magnetisches Lager auf einfache und kostengünstige Weise mit einem dreiphasigen Drehstromsteller 10 betreibbar.

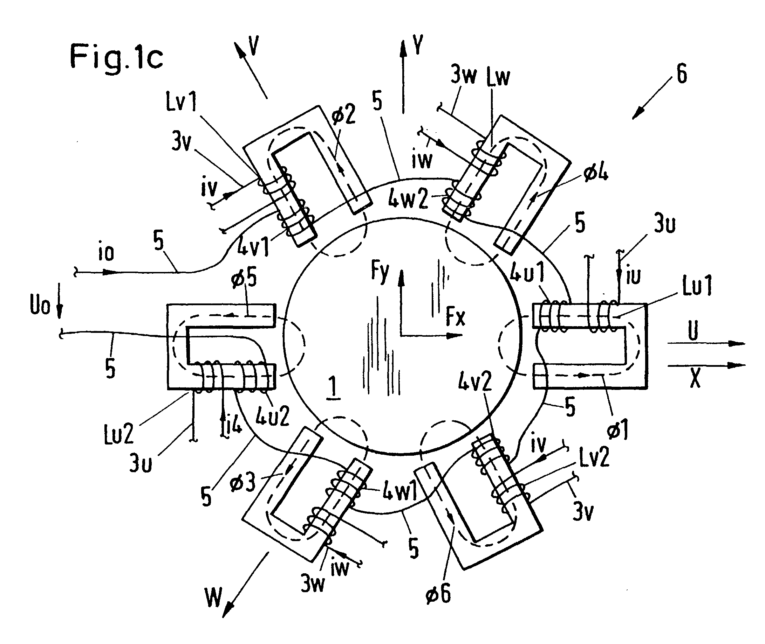

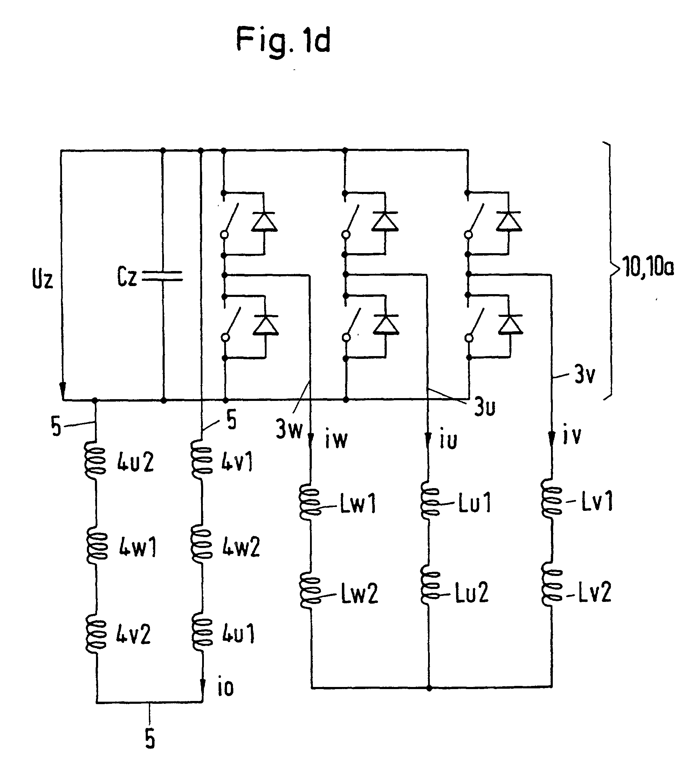

Fig. 1c zeigt eine Seitenansicht eines Ausführungsbeispieles eines radialen, aktiven magnetischen Lagers, welches, ansonst ähnlich zur Ausführung gemäss Fig. 1a, in Umfangsrichtung sechs, um je 60° versetzt angeordnete Elektromagnete aufweist. Wie aus der elektrischen Schaltung gemäss Fig. 1d ersichtlich, sind die Spulen Lu1, Lu2 in Serie geschaltet und sind vom gleichen Strom iu durchflossen. Das gleiche gilt für die in Serie geschalteten Spulen Lw1, Lw2 und die Spulen Lv1, Lv2, welche je vom gemeinsamem Strom iv oder iw durchflossen sind. Zur Vormagnetisierung sind die Spulen 4v1, 4w2, 4u1, 4v2, 4w1 und 4u2 über einen gemeinsamen elektrischen Leiter 5 in Serie geschaltet an der Zwischenkreisspannung Uz angeschlossen, und somit von einem gemeinsamen Strom io durchflossen. In den einzelnen, diskret und u-förmig ausgestalteten Elektromagneten wird ein entsprechender, zeitlich variabler, magnetischer Fluss $\phi 1$, $\phi 2$, $\phi 3$, $\phi 4$, $\phi 5$, $\phi 6$ erzeugt.

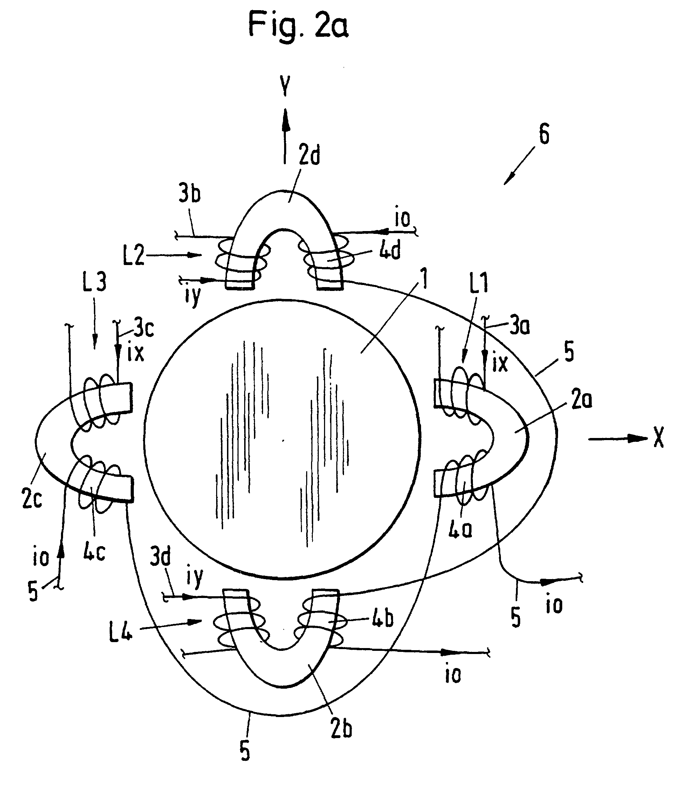

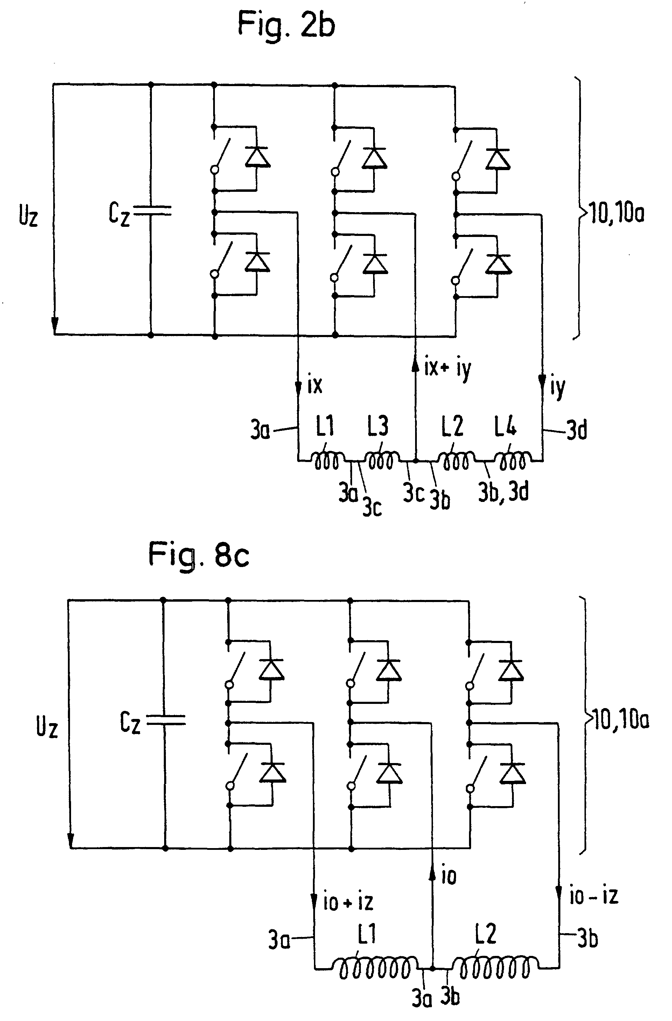

In Fig. 2a ist in einer Seitenansicht ein weiteres Ausführungsbeispiel eines magnetischen Lagers 6 mit vier u-förmig und diskret ausgestalteten, in Umfangsrichtung um gegenseitig 90° versetzt angeordneten Elektromagneten 2a,2b,2c,2d dargestellt. Jedes Elektromagnet weist eine Spule L1, L2, L3, L4 mit elektrischem Leiter 3a, 3b, 3c, 3d auf, welche, wie in Fig. 2b dargestellt, mit dem dreiphasigen Drehstromsteller 10 verbunden sind. Dabei sind die beiden Spulen L1 und L3 in Serie geschaltet und werden vom gemeinsamen Strom ix durchflossen. Die beiden Spulen L2 und L4 sind ebenfalls in Serie geschaltet und werden vom gemeinsamen Strom iy durchflossen. Der dritte Zweig des Drehstromstellers 10 ist vom Summenstrom ix+iy durchflossen. Diese Anordnung ermöglicht die Ansteuerung von vier Elektromagneten mit einem dreiphasigen Drehstromsteller 10, wobei zu beachten ist, dass der Summenstrom ix+iy den maximal zulässigen Strom des Drehstromstellers 10 nicht überschreitet. Die Anordnung gemäss Fig. 2a, 2b ist ebenfalls mit der im Drehstromsteller 10 integrierten Regelvorrichtung 10b betreibbar, wobei die 2/3-Phasen-Transformation 13 entsprechend den vier vorhandenen Elektromagneten angepasst ausgestaltet ist, um die Sollwerte für die Ströme ix und iy zu berechnen. Im Ausführungsbeispiel gemäss Fig. 2b erfolgt die Speisung der Spulen 4a, 4b, 4c, 4d zur Erzeugung einer Vormagnetisierung nicht über die Zwischenkreisspannung Uz des Drehstromstellers 10, sondern über eine zusätzliche, nicht dargestellte Anspeisevorrichtung.

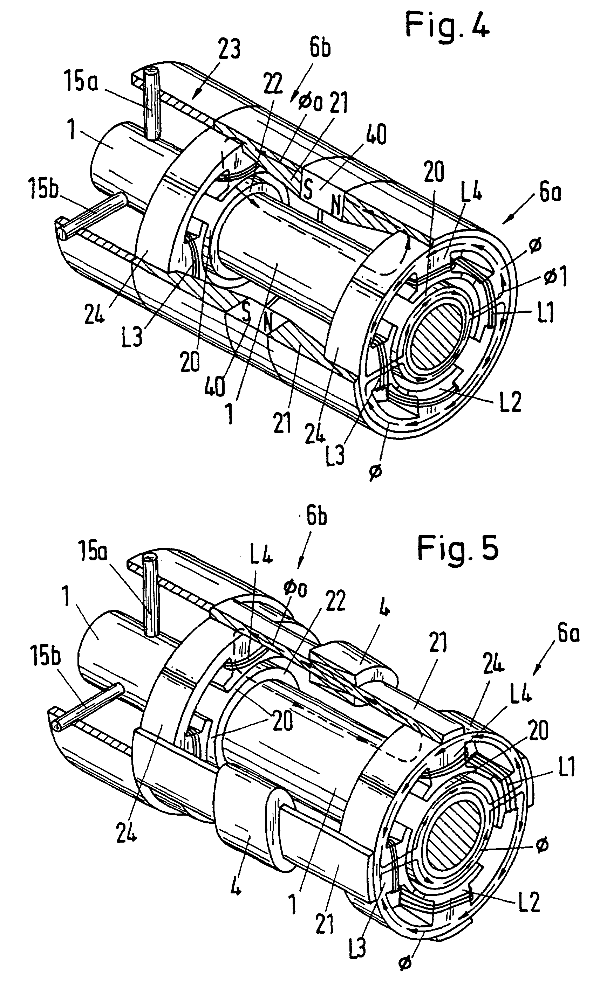

Fig. 4 zeigt ein weiteres Ausführungsbeispiels eines magnetischen Lagers mit zwei axial beabstandet angeordneten aktiven magnetischen Lagern 6a, 6b, welche beide von je einem dreiphasigen Drehstromsteller 10 angesteuert sind. Im Gegensatz zu den bisher dargestellten Ausführungsformen weist das Lager 6a nicht einzeln angeordnete Elektromagnete auf. Das Lager 6a weist einen durchgehenden, ringförmigen Körper 24 auf, mit vier in radialer Richtung verlaufenden Spulenkörpern, auf welchen die Spulen L1, L2, L3, L4 angeordnet sind. So fliesst beispielsweise der durch die Spule L1 erzeugte magnetische Fluss $\phi 1$ über den ringförmigen ausgebildeten Stator 24 und durch die Spule L3 hindurch, und über den Luftspalt 20 und den Rotor 1 wieder zurück zur Spule L1. Die beiden Lager 6a, 6b sind über das metallische Gehäuse 21 magnetisch aneinander gekoppelt unter Ausbildung eines Unipolarlagers. Im Gehäuse 21 ist ein den Rotor 1 in Umfangsrichtung umgebender Permanentmagnet 40 angeordnet, welcher eine konstante Gleichstromdurchflutung $\phi o$ bzw. einen Unipolarfluss erzeugt, welcher über das Lager 6b, den Rotor 1, das Lager 6a und das Gehäuse 21 verläuft. Das Gehäuse 21 weist ein vorstehendes Teil 23 zum Halten der Lagesensoren 15a, 15b auf. Die Spulen L1,L2,L3,L4 jedes Lagers 6a, 6b lassen sich wie in der durch Fig. 2b dargestellten Anordnung mit einem dreiphasigen Drehstromsteller 10 verbinden. Die zwei erforderlichen Drehstromsteller 10 werden von einer übergeordneten Ansteuervorrichtung angesteuert, um das gesamte, in Fig. 4 dargestellte Unipolarlager zu betreiben.

Fig. 5 zeigt ein zum Ausführungsbeispiel gemäss Fig. 4 sehr ähnlich ausgestaltetes Unipolarlager umfassend zwei radiale, aktive magnetische Lager 6a, 6b. Anstelle des Permanentmagneten 40 sind in Fig. 5 zwei mit einem Gleichstrom io betriebene Elektromagnete 4 angeordnet, welche über magnetisch leitende Stege 21 an die ringförmig verlaufenden Körper 24 gekoppelt sind, sodass wiederum eine konstante Gleichstromdurchflutung $\phi o$ bzw. ein Unipolarfluss entsteht.

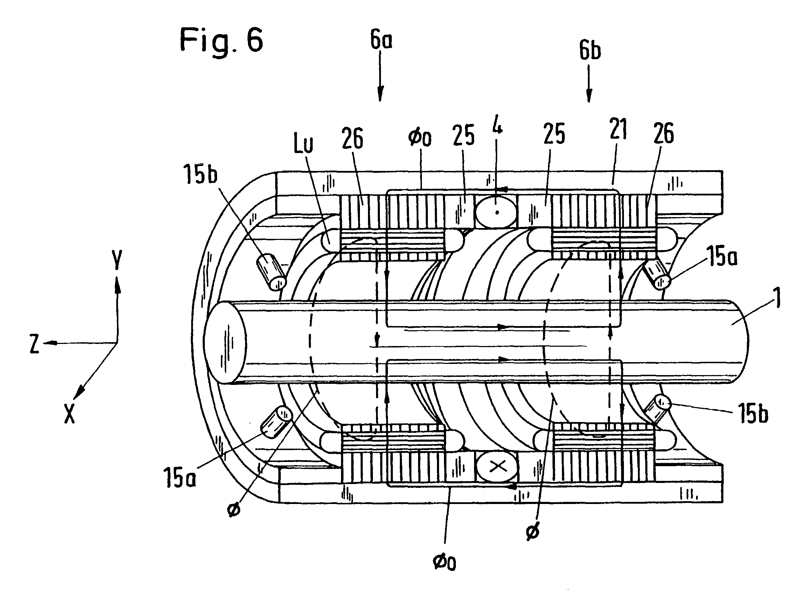

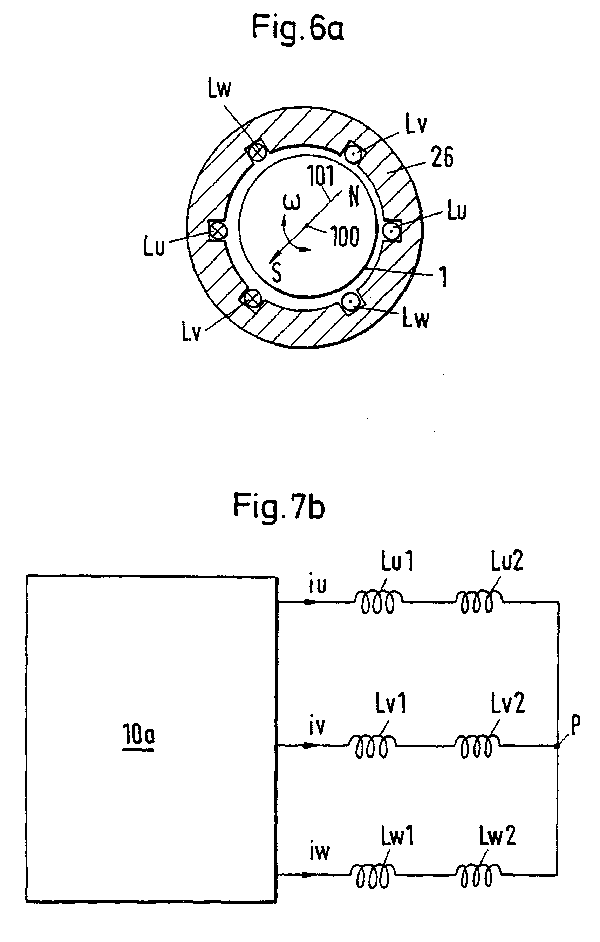

Fig. 6 zeigt ein weiteres Unipolarlager mit zwei in axialer Richtung zur Welle 1 beabstandet angeordneten radialen, aktiven magnetischen Lagern 6a, 6b. Beide Lager 6a, 6b sind als Drehfeldmaschinenstatoren 26 ausgestaltet und weisen entsprechend über den Umfang verteilt angeordnete Dreiphasenwicklungen Lu, Lv, Lw auf. Die konstante Gleichstromdurchflutung $\phi o$ wird über eine die Welle 1 in Umfangsrichtung umgebende Gleichstromspule 4 erzeugt, welche über Flussleitringe 25 an die Drehfeldmaschinenstatoren 26 angekoppelt ist. Die Dreiphasenwicklungen Lu, Lv,Lw erzeugen in den Lagern 6a, 6b einen magnetischen Fluss $\phi$. Die Lage des Rotors 1 wird mit Sensoren 15a, 15b gemessen. Die drei Spulen Lu,Lv,Lw jedes Lagers 6a, 6b sind in gleicher Weise wie in Fig. 1b dargestellt, mit je einem dreiphasigen Drehstromsteller 10 verbunden. Eine übergeordnete Ansteuervorrichtung regelt beide Drehstromsteller 10 sowie den in der Spule 4 fliessenden Gleichstrom io.

Fig. 6a zeigt einen vereinfachten Querschnitt durch den Drehfeldmaschinenstator 26 gemäss Fig. 6. Der Drehfeldmaschinenstator 26 weist drei in axialer Richtung verlaufende Spulen Lu,Lv,Lw auf, die in Umfangsrichtung des Drehfeldmaschinenstators 26 versetzt angeordnet sind. Diese Spulen Lu,Lv,Lw sind nur symbolisch dargestellt und weisen üblicherweise eine Vielzahl von einzelnen elektrischen Leitern auf, die zudem in Umfangsrichtung des Drehfeldmaschinenstators 26 verteilt angeordnet sind. Die Spulen Lu,Lv,Lw sind derart im Drehfeldmaschinenstator 26 angeordnet und werden derart vom dreiphasigen Drehstromsteller 10 angesteuert, dass ein zweipoliges, in radialer Richtung verlaufendes magnetisches Feld 101 im Drehfeldmaschinenstator 26 erzeugt wird, das in Richtung $\omega$ um den Mittelpunkt 100 des Rotors 1 drehbar ist. Die Spulen Lu,Lv,Lw sind derart ansteuerbar, dass entweder ein sich drehendes magnetisches Feld 101 erzeugt wird, oder, bei einer Ansteuerfrequenz von Null, ein stehendes, magnetisches Feld 101 erzeugt wird, wobei der Betrag und die Ausrichtung des stehenden Feldes 101 durch die Ansteuerung der Spulen Lu,Lv,Lw frei vorgebbar ist. Somit ist mit Hilfe des dreiphasigen Drehstromstellers 10 ein in einer vorgebbaren Richtung verlaufendes und einen vorgebbaren Betrag aufweisendes magnetisches Feld 101 im Drehfeldmaschinenstator 26 oder auch in einem der übrigen, im vorliegenden Dokument dargestellen magnetischen Lager 6 erzeugbar.

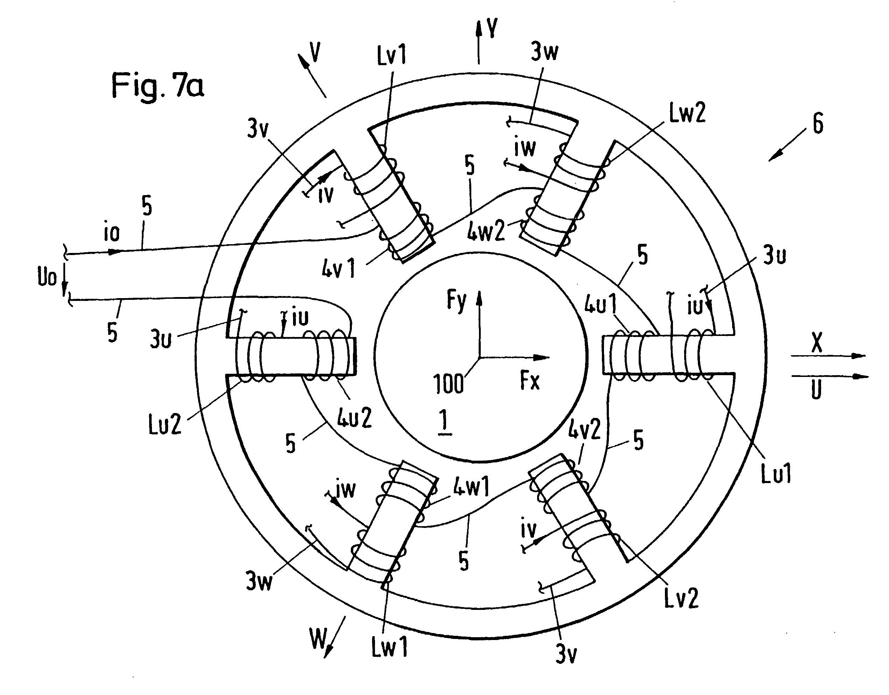

Fig. 7a zeigt ein weiteres Ausführungsbeispiel einer radialen, aktiven magnetischen Lagervorrichtung 6. Der Rotor 1 ist durch sechs diskret ausgestaltete, in Umfangsrichtung um je 60° versetzt angeordnete Elektromagnete mit Spulen Lu1,Lu2,Lv1,Lv2,Lw1,Lw2 berührungslos in der Schwebe gehalten. Jeder zahnförmige Elektromagnet weist zudem eine Spule 4u1,4u2,4v1,4v2,4w1,4w2 auf, welche über einen elektrischen Leiter 5 in Serie geschaltet sind und, von einer Gleichspannungsquelle Uo gespeist, mit einem Gleichstrom io durchflossen sind. Dieser Gleichstrom io bewirkt im Lager 6 eine Vormagnetisierung. Fig. 7b zeigt die elektrische Verbindung der Spulen Lu1,Lu2,Lv1,Lv2,Lw1,Lw2 mit dem Leistungsteil 10a des Drehstromstellers 10. In radialer Richtung gegenüber liegende Spulen Lu1,Lu2;Lv1,Lv2;Lw1,Lw2 sind in Serie geschaltet, wobei diese Serieschaltungen in einer Sternschaltung am Sternpunkt P miteinander verbunden sind. Diese Serieschaltungen können auch in einer Dreieckschaltung miteinander verbunden sein.

Die in den Figuren 4 bis 6 dargestellten Unipolarlager lassen sich auch mit nur einem einzigen Drehstromsteller 10 betreiben. Diese Ausführungsform wird mit Hilfe des Lagers gemäss Fig. 4 im Detail beschrieben. Die Spule L3 des Lagers 6a sowie die Spule L3 des Lagers 6b sind gegenläufig gewickelt jeweils auf den ringförmigen Körpern 24 anzuordnen. Diese beiden Spulen L3 sind in Serie geschaltet und werden somit vom gleichen Strom durchflossen. Die weiteren Spulen L1,L2 und L4 sind gleichartig wie die Spule L3 angeordnet, indem die im Lager 6a angeordneten Spulen L1,L2,L4 gegenläufig gewickelt sind zu den im Lager 6b angeordneten Spulen L1,L2,L4. Die beiden Spulen L1 sowie die beiden Spulen L2 sowie die beiden Spulen L4 sind jeweils in Serie geschaltet. Diese Anordung ist mit dem Drehstromsteller 10 in einer in Fig. 2b dargestellten Weise verbindbar, wobei die in Fig. 2b mit L1,L2,L3,L4 dargestellten Spulen jeweils der Serieschaltung zweier Spulen L1,L2,L3,L4 gemäss Fig. 4 entsprechen. Somit ist ein wie in den Figuren 4, 5 und 6 dargestelltes Unipolarlager mit einem einzigen Drehstromsteller 10 betreibbar. Die zwischen den beiden Lagern 6a, 6b angeordnete Welle 1 kann auch sehr kurz ausgestaltet sein, sodass die beiden Lager 6a, 6b mit nur sehr geringem Abstand nebeneinander angeordnet sind.

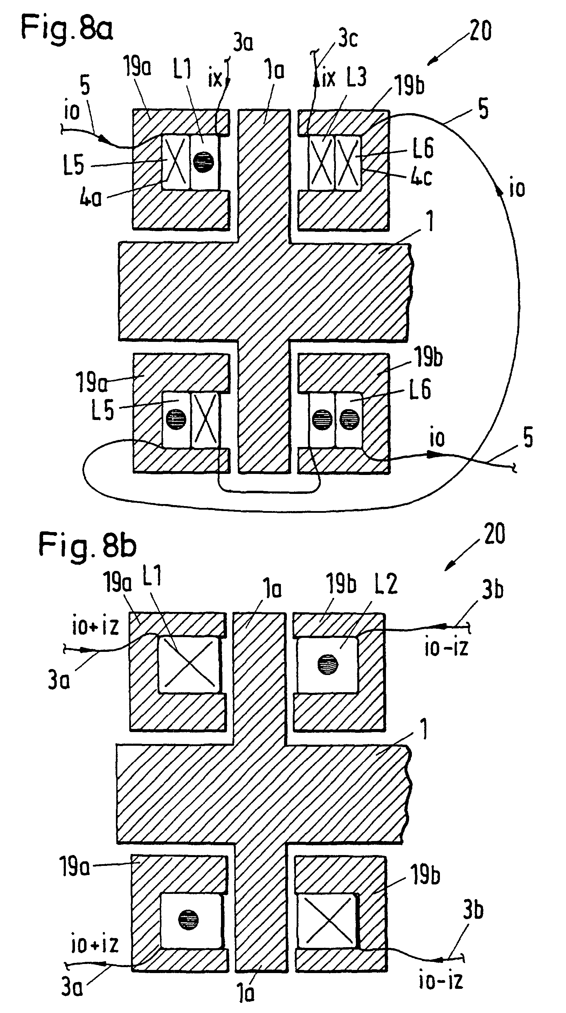

Die Figuren 8a und 8b zeigen ein axiales, magnetisches Lager 20, welches ein Bestandteil der radialen aktiven magnetischen Lagervorrichtung bilden kann. Die vom radialen magnetischen Lager 6 gehaltene Welle 1 mündet an deren einem Ende in das axiale Lager 20. Die Welle 1 weist ein scheibenförmiges Teil 1a auf, welches zwischen zwei Elektromagneten 19a, 19b liegend angeordnet ist. Die Elektromagnete 19a, 19b sind kreisförmig ausgestaltet und radial beabstandet zur Welle 1 angeordnet. Entsprechend dem in den Spulen L1, L3, L5, L6 fliessenden Strom wird eine auf das scheibenförmige Teil 1a wirkende, in axialer Richtung verlaufende magnetische Kraft erzeugt. Somit ist die Lage der Welle 1 in axialer Richtung durch das axiale Lager 20 ansteuerbar. Im Ausführungsbeispiel gemäss Fig. 8b weist jedes Elektromagnet 19a, 19b eine Spule L1, L2 auf, die in Umfangsrichtung der Welle 1 gewickelt sind. Die Spulen L1,L2 werden, wie in Fig. 8c dargestellt, von einem dreiphasigen Drehstromsteller 10,10a angesteuert, wobei der Spule L1 über die Zuleitung 3a ein Strom io+iz zufliesst, wogegen der Spule L2 über die Zuleitung 3b ein Strom io-iz zufliesst. Der Strom iz wird durch den Drehstromsteller 10, 10a moduliert und kann positive oder negative Werte annehmen, sodass die Welle 1 durch die vom axialen Lager 90 bewirkten Kräfte beidseitig in axialer Richtung verschiebbar ist. Im Ausführungsbeispiel gemäss Fig. 8a weist der Elektromagnet 19a zwei Spulen L1,L5 auf, welche in Umfangsrichtung der Welle 1 verlaufend gewickelt sind. Die Spule L5 ist über die Zuleitung 5 von einem konstanten Strom io durchflossen, wogegen die Spule L1 über die Zuleitung 3a von einem variablen Strom ix durchflossen ist. Der Elektromagnet 19b weist ebenfalls zwei Spulen L3, L6 auf, wobie die Spule L6 in Serie zur Spule L5 geschaltet ist und daher ebenfalls vom konstanten Strom io durchflossen ist. Die Spule L3 ist in Serie zur Spule L1 geschaltet und daher ebenfalls vom variablen Strom ix durchflossen. Ein Vorteil der Anordnung gemäss Fig. 8a ist darin zu sehen, dass durch die gewählte Anordnung der Spulen L1,L3,L5,L6 mit einem einzigen Drehstromsteller 10 zwei axiale Lager 20 unabhängig voneinander betreibbar sind. Wird das axiale Lager 20 mit einer elektrischen Schaltung gemäss Fig. 2b angesteuert, so werden die Spulen L1,L3, wie in Fig. 2b dargestellt, vom Strom ix in Serie durchflossen. Der Strom ix ist durch den Drehstromsteller 10 vorgebbar, sodass das axiale Lager 20 ansteuerbar ist. Im zweiten Strompfad iy des Drehstromstellers 10, mit Zuleitung 3d und Ableitung 3b, kann ein zweites, identisch der Ausführung gemäss Fig. 8a ausgestaltetes, axiales Lager 20 betrieben werden. Der Strom iy ist durch den Drehstromsteller 10 vorgebbar. Die Ströme ix und iy sind unabhängig voneinander vorgebbar, sodass mit einem einzigen Drehstromsteller 10 zwei axiale Lager 20 unabhängig voneinander ansteuerbar sind. Diese zwei axialen Lager 20 können an zwei unterschiedlchen Wellen 1 angeordnet sind. Somit ist mit einem einzigen Drehstromsteller 10 die axiale Lage von zwei Wellen 1 unabhängig voneinander ansteuerbar.

**Patentansprüche**

1. Radiale, aktive magnetische Maxwell-Lagervorrichtung mit einer Vormagnetisierung, umfassend zumindest drei verteilt angeordnete Elektromagnete (2a,2b,2c,2d;2u,2v,2w) und einen Leistungssteller zur Ansteuerung der Spulen (Lu,Lv,Lw; L1,L2,L3,L4) der Elektromagnete (2a,2b,2c,2d;2u,2v,2w), **dadurch gekennzeichnet, dass** als Leistungssteller ein dreiphasiger Drehstromsteller (10) vorgesehen ist.

2. Magnetische Lagervorrichtung gemäss Anspruch 1, **dadurch gekennzeichnet, dass** die Elektromagnete (2a,2b, 2c,2d;2u,2v,2w) diskret ausgestaltet sind.

3. Magnetische Lagervorrichtung gemäss Anspruch 2, **dadurch gekennzeichnet, dass** drei Elektromagnete (2u,2v, 2w) in einer Umfangsrichtung um 120° versetzt angeordnet sind.

4. Magnetische Lagervorrichtung gemäss Anspruch 2, **dadurch gekennzeichnet, dass** vier Elektromagnete (2a,2b, 2c,2d) in einer Umfangsrichtung um 90° versetzt angeordnet sind.

5. Magnetische Lagervorrichtung gemäss Anspruch 2, **dadurch gekennzeichnet, dass** sechs Elektromagnete in einer Umfangsrichtung um 60° versetzt angeordnet sind.

6. Magnetische Lagervorrichtung gemäss Anspruch 1, **dadurch gekennzeichnet, dass** die Elektromagnete (2u,2v, 2w) als Drehfeldmaschinenstator mit einer Dreiphasenwicklung (Lu,Lv,Lw) ausgestaltet sind.

7. Magnetische Lagervorrichtung gemäss einem der Ansprüche 1 bis 6, **dadurch gekennzeichnet, dass** zur Erzeugung der Vormagnetisierung zumindest eine zusätzliche Spule (4,4a,4b,4c,4d,4u,4v,4w) oder ein Permanentmagnet (40) vorgesehen ist.

8. Magnetische Lagervorrichtung nach einem der Ansprüche 1 bis 7, **dadurch gekennzeichnet, dass** die Spulen (Lu,Lv,Lw; L1,L2,L3,L4) der Elektromagnete in einer Stern- oder Dreieckschaltung mit dem dreiphasigen Drehstromsteller (10) verbunden sind.

9. Verfahren zum Betrieb einer magnetischen Maxwell-Lagervorrichtung nach einem der Ansprüche 1 bis 8, **dadurch gekennzeichnet, dass** die Lage des Rotors (1) in einer x- und y-Richtung durch einen Sollwert (Xsoll,Ysoll) vorgebbar ist, dass mit einem Positionssensor (15a,15b) die Lage des Rotors (1) in x- und y-Richtung erfasst wird, dass die Regelabweichung in x- und y-Richtung berechnet wird und über eine 2/3-Phasen-Transformation die Sollstromwerte (isollu, isollv) für einen dreiphasigen Drehstromsteller (10) berechnet und diesem vorgegeben werden, sodass die Spulen (Lu,Lv,Lw;L1,L2,L3,L4) der Elektromagnete (2a,2b,2c,2d;2u,2v,2w) derart mit Strom versorgt werden, dass die Lage des Rotors (1) dem vorgebbaren Sollwert (Xsoll, Ysoll) entspricht.

10. Vorrichtung umfassend magnetische Maxwell-Lagervorrichtungen nach einem der Ansprüche 1 bis 8.

**Claims**

1. Radial, active magnetic Maxwellian bearing apparatus having a bias magnetisation and including at least three electromagnets (2a, 2b, 2c, 2d; 2u, 2v, 2w) which are distributedly arranged amd a power controller for the excitation of the coils (Lu, Lv, Lw; L1, L2, L3, L4) of the electromagnets (2a, 2b, 2c, 2d; 2u, 2v, 2w), **characterised in that** a three-phase rotary current controller (10) is provided.

2. Magnetic bearing apparatus in accordance with claim 1, **characterised in that** the electromagnets (2a, 2b, 2c, 2d; 2u, 2v, 2w) are of discrete design.

3. Magnetic bearing apparatus in accordance with claim 2 **characterised in that** three electromagnets (2u, 2v, 2w) are respectively mutually displaced in the peripheral direction by 120°.

4. Magnetic bearing apparatus in accordance with claim 2 **characterised in that** four electromagnets (2a, 2b, 2c, 2d) are respectively mutually displaced in the peripheral direction by 90°.

5. Magnetic bearing apparatus in accordance with claim 2 **characterised in that** six electromagnets are respectively mutually displaced in the peripheral direction by 60°.

6. Magnetic bearing apparatus in accordance with claim 1, **characterised in that** the electromagnets (2u, 2v, 2w) are designed as a rotary field machine stator with a three-phase winding (Lu, Lv, Lw).

7. Magnetic bearing apparatus in accordance with one of the claims 1 to 6 **characterised in that** at least one additional coil (4, 4a, 4b, 4c, 4d, 4u, 4v, 4w) or a permanent magnet (40) is arranged for the production of a bias magnetisation.

8. Magnetic bearing apparatus in accordance with one of the claims 1 to 7 **characterised in that** the coils (Lu, Lv, Lw; L1, L2, L3, L4) of the electromagnets are connected to the rotary current controller (10) in a star or delta circuit.

9. Method for the operation of a magnetic Maxwellian bearing apparatus in accordance with one of the claims 1 to 8, **characterised in that** the position of the rotor (1) is predeterminable in an x-direction and in a y-direction by a desired value (Xsoll, Ysoll); **in that** the position of the rotor (1) is measured by a position sensor (15a, 15b) in the x-direction and in the y-direction; and **in that** the control deviations in the x-direction and in the y-direction are calculated and the desired current values (isollu, isollv) are calculated by a 2/3-phase transformation for a three-phase rotary current controller (10) and are provided to the latter so that the coils (Lu, Lv, Lw; L1, L2, L3, L4) of the electromagnets (2a, 2b, 2c, 2d; 2u, 2v, 2w) are supplied with current in such a manner that the position of the rotor (1) corresponds to the predeterminable desired value (Xsoll, Ysoll).

10. Apparatus including Maxwellian bearing apparatuses in accordance with one of the claims 1 to 8.

**Revendications**

1. Dispositif de palier magnétique actif radial de Maxwell avec une prémagnétisation, comprenant au moins trois électro-aimants disposés selon une répartition (2a, 2b, 2c, 2d ; 2u, 2v, 2w) et un régulateur de puissance pour la commande des bobines (Lu, Lv, Lw ; L1, L2, L3, L4) des électro-aimants (2a, 2b, 2c, 2d ; 2u, 2v, 2w), **caractérisé en ce qu'**il est prévu comme régulateur de puissance un régulateur rotatoir à courant triphasé (10).

2. Dispositif de palier magnétique selon la revendication 1, **caractérisé en ce que** les électro-aimants (2a, 2b, 2c, 2d ; 2u, 2v, 2w) sont réalisés d'une manière discrète.

3. Dispositif de palier magnétique selon la revendication 2, **caractérisé en ce que** trois électro-aimants (2u, 2v, 2w) sont disposés dans une direction périphérique avec un décalage de 120°.

4. Dispositif de palier magnétique selon la revendication 2, **caractérisé en ce que** quatre électro-aimants (2a, 2b, 2c, 2d) sont disposés dans une direction périphérique selon un décalage de 90°.

5. Dispositif de palier magnétique selon la revendication 2, **caractérisé en ce que** six électro-aimants sont disposés dans une direction périphérique selon un décalage de 60°.

6. Dispositif de palier magnétique selon la revendication 1, **caractérisé en ce que** les électro-aimants (2u, 2v, 2w) sont réalisés comme stator de machine à champ tournant avec un enroulement triphasé (Lu, Lv, Lw).

7. Dispositif de palier magnétique selon l'une des revendications 1 à 6, **caractérisé en ce que** pour produire la prémagnétisation, au moins une bobine additionnelle (4, 4a, 4b, 4c, 4d, 4u, 4v, 4w) ou un aimant permanent (40) est prévu.

8. Dispositif de palier magnétique selon l'une des revendications 1 à 7, **caractérisé en ce que** les bobines (Lu, Lv, Lw ; L1, L2, L3, L4) des électro-aimants sont reliées en un montage en étoile ou en triangle au régulateur à courant triphasé (10).

**9.** Procédé de fonctionnement d'un dispositif de palier magnétique de Maxwell selon l'une des revendications 1 à 8, **caractérisé en ce que** la position du rotor (1) dans une direction x et y peut être prédéfinie par une valeur de consigne (Xconsigne, Yconsigne), **en ce qu'**au moyen d'un capteur de position (15a, 15b), la position du rotor (1) est détectée dans la direction x et y, **en ce que** l'écart de réglage est calculé dans la direction x et y et, par une transformation de 2/3 phases, les valeurs de courant de consigne (iconsigneu, iconsignev) pour un régulateur à courant triphasé (10) sont calculées et sont prédéterminées pour celui-ci de sorte que les bobines (Lu, Lv, Lw, L1, L2, L3, L4) des électro-aimants (2a, 2b, 2c, 2d; 2u, 2v, 2dw) sont alimentées en courant de façon que la position du rotor (1) corresponde à la valeur de consigne prédéfinissable (Xconsigne, Yconsigne).

**10.** Dispositif comprenant des dispositifs de palier magnétiques de Maxwell selon l'une des revendications 1 à 8.

Fig.1a

# Fig. 1b

Fig.1c

# Fig. 1d

# Fig. 2a

## Fig. 2b

## Fig. 8c

# Fig. 3

EP 0 845 084 B1

Fig. 4

Fig. 5

Fig. 6

# Fig. 6a

# Fig. 7b

Fig. 7a

Fig.8a

Fig.8b